# EUROPÄISCHE PATENTANMELDUNG

(11) **EP 2 572 760 A2**
(43) Veröffentlichungstag der Anmeldung: **27.03.2013**
(21) Anmeldenummer: 12182952.7
(22) Anmeldetag: 04.09.2012
(51) Int. Cl.: A62C 2/06

(54) **Brandschutzmanschette**

(30) Priorität: 20.09.2011 DE 102011083035
(71) Anmelder: HILTI Aktiengesellschaft, 9494 Schaan (LI)
(72) Erfinder: Förg, Christian, 86862 Dillishausen (DE)

(57) **Zusammenfassung**

Brandschutzmanschette mit einem aus Blech bestehenden Trägerband und einem Intumeszenzstreifen, der entlang des Trägerbands verläuft und mit diesem verbunden ist. Das Trägerband weist mehrere vordefinierte und in einer Längsrichtung voneinander beabstandete sich quer zu dieser Längsrichtung erstreckende Schneidezonen auf. Der Intumeszenzstreifen weist in gleicher Weise orientierte Schneidbereiche auf, in denen eine Dicke des Intumeszenzstreifens gegenüber in Längsrichtung benachbarten Bereichen verringert ist. Die Schneidbereiche des Intumeszenzstreifens und die Schneidezonen des Trägerbands fallen zusammen.

## Beschreibung

Die Erfindung betrifft eine Brandschutzmanschette mit einem aus Blech bestehenden Trägerband und einem Intumeszenzstreifen.

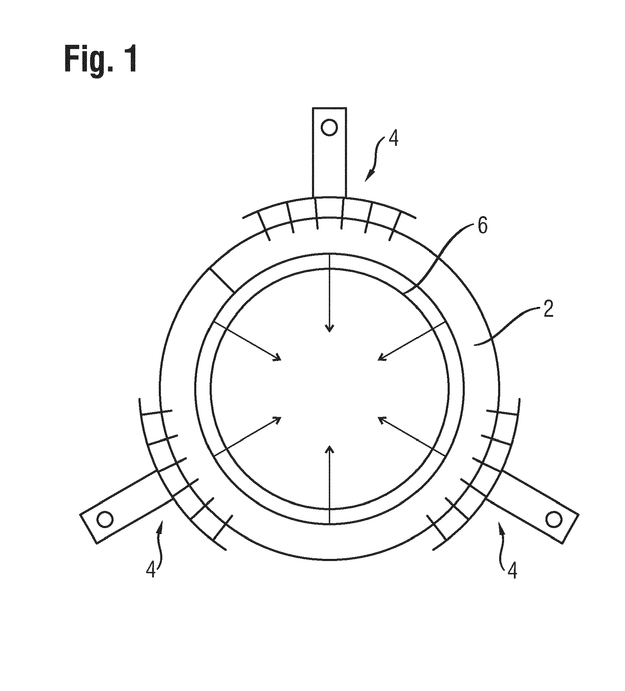

Brandschutzmanschetten werden um Rohre oder Kabel, welche durch einen Durchbruch in einer Wand oder Decke geführt sind, angeordnet und umfassen Intumeszenzmaterial, welches sich bei Hitze ausdehnt und den Durchbruch möglichst dicht verschließt, sodass eine Ausbreitung des Feuers verhindert werden kann. Diese Situation ist beispielhaft in FIG. 1 gezeigt. In Draufsicht ist eine Brandschutzmanschette 2 gezeigt, die mit Haltern 4 an einer Wand befestigt ist. Im Brandfall dehnt sich das in der Brandschutzmanschette 2 enthaltene Intumeszenzmaterial (wie mit Pfeilen angedeutet) in Richtung des Durchbruchs aus, durch den ein Rohr 6 geführt ist. Je nach Anzahl und Größe der in einem Wand- oder Deckendurchbruch vorhandenen Rohre, Kabelstränge, etc. müssen zur brandschutztechnischen Absicherung des Durchbruchs Brandschutzmanschetten mit unterschiedlichem Durchmesser bereitgehalten werden. Dies bedeutet einen logistischen und finanziellen Aufwand.

In der EP 1 181 481 B1 ist ein fortlaufender Streifen mit querverlaufenden Sollbruchlinien bekannt, der als rohrgrößenflexible Brandschutzmanschette eingesetzt werden kann. Bei diesem Streifen ist jedoch nachteilig, dass das Ablängen in mindestens zwei Arbeitsschritten erfolgen muss.

Aufgabe der vorliegenden Erfindung ist es, eine Brandschutzmanschette anzugeben, deren Größe flexibel angepasst werden kann und welche sich außerdem leicht verarbeiten lässt.

Gemäß einem Aspekt der Erfindung wird eine Brandschutzmanschette angegeben, die aus einem aus Blech bestehenden Trägerband und einem Intumeszenzstreifen besteht. Der Intumeszenzstreifen verläuft entlang des Trägerbandes und ist mit diesem verbunden. Das Trägerband ist mit mehreren vordefinierten, in einer Längsrichtung des Trägerbandes voneinander beabstandeten und quer zu der Längsrichtung verlaufenden Schneidezonen versehen. Der Intumeszenzstreifen weist mehrere Schneidbereiche auf, welche in gleicher Weise wie die Schneidezonen des Trägerbandes orientiert sind. In den Schneidbereichen ist eine Dicke des Intumeszenzstreifens gegenüber den in Längsrichtung benachbarten Bereichen verringert. Die Schneidbereiche fallen mit den Schneidezonen zusammen.

Die Größe der Brandschutzmanschette gemäß Aspekten der Erfindung kann flexibel angepasst werden. So kann der Durchmesser der Bandschutzmanschette an verschieden große Durchmesser von Durchbrüchen angepasst werden wobei gleichzeitig kompakte Manschettenaußenmaße eingehalten werden können. Vorteilhaft kann das Ablängen der Manschette in einem einzigen Arbeitsschritt erfolgen. Zur Ablängung der Brandschutzmanschette kann ein Schneidwerkzeug, beispielsweise eine Blechschere verwendet werden.

Gemäß einem Aspekt der Erfindung ist das Trägerband der Brandschutzmanschette so gestaltet, dass sich dieses in den Schneidezonen leichter schneiden lässt. Zu diesem Zweck kann in den Schneidezonen ein dünneres Blech als in den benachbarten Bereichen verwendet werden. Auch kann das Blech in den Schneidezonen perforiert sein.

Die Breite der Schneidzone bzw. der Schneidbereiche ist so gewählt, dass ein Schneidwerkzeug ungehindert in die Schneidbereiche gelangen kann, ohne an die benachbarten dickeren Bereiche anzusetzen. Somit muss möglichst wenig Material durchtrennt werden, was einen geringeren Kraftaufwand beim Ablängen der Brandschutzmanschette bedeutet. Allgemein sollten die Scheidbereiche mindestens so breit wie das Schneidwerkzeug (z.B. Messer) bzw. der Teil des Schneidwerkzeugs, welcher in die Schneidzone dringt (z.B. Scherenschenkel), sein. Für die meisten (einfachen) Schneidwerkzeuge hat sich eine Breite im Bereich von 2 bis 6 mm als ausreichend herausgestellt. Es ist jedoch möglich, die Breite der Schneidzone außerhalb dieses Bereichs zu wählen.

Gemäß einer Ausführungsform weist der Intumeszenzstreifen, in Längsrichtung des Trägerbandes betrachtet, ein Rippen- oder Wellenprofil auf. Die Schneidbereiche des Intumeszenzstreifens befinden sich in den Wellentälern dieses Profils. Die an einen Schneidebereich angrenzenden Flanken der Wellenberge, die sich zu beiden Seiten des entsprechenden Wellentals erstrecken, sind bevorzugt so geneigt, dass sich der im Wellental befindliche Schneidbereich mit einem Schneidwerkzeug bequem erreichen lässt.

Ein weiteres Kriterium für die Wahl dieses Öffnungswinkels ist, dass in dem Fall, dass die Brandschutzmanschette um den kleinsten angestrebten Leitungsdurchmesser gewickelt ist, sich die beiden Flanken der Wellenberge nicht oder gerade so berühren.

Gemäß einem weiteren Aspekt der Erfindung beträgt die Dicke des Intumeszenzstreifens in dem Schneidebereich maximal 5 mm. Diese Dicke ist bevorzugt so auszulegen, dass die strukturelle Einheit aus Trägerband und Intumeszenzstreifen ausreichend stabil ist und beim Umwickeln eines Leitungsstrangs nicht bricht. Die Dicke des Intumeszenzstreifens in dem Schneidbereich sollte andererseits so dünn wie möglich gewählt werden, damit eine gute Schneidbarkeit der Brandschutzmanschette gewährleistet ist. Ein Wert von maximal 5 mm hat sich in empirischen Versuchen als guter Kompromiss herausgestellt. Gemäß einer weiteren Ausführungsform beträgt die Breite des Schneidbereichs mindestens 3 mm. Diese Breite sollte so groß gewählt werden, dass ein Schneidwerkzeug sicher angesetzt werden kann. Auch hier haben empirische Untersuchungen den genannten Wert bestätigt.

Das Abtrennen bzw. Ablängen der Brandschutzmanschette kann weiter vereinfacht werden, wenn, gemäß einer weiteren Ausführungsform, der Intumeszenzstreifen, in Längsrichtung des Trägerbandes betrachtet, aus mehreren getrennten Blöcken besteht, zwischen denen jeweils ein Zwischenraum vorhanden ist, der einen Schneidbereich bildet. Da der Intumeszenzstreifen in diesem Fall nicht mehr durchgängig ist, kann die Verbindung zwischen dem Intumeszenzstreifen und dem Trägerband verbessert werden, indem, gemäß einem weiteren Aspekt der Erfindung, das Trägerband mit mehreren Haken versehen wird. Diese können durch gestanzte und abgebogene Blechabschnitte des Trägerbandes gebildet sein. Bevorzugt sind die die Haken bildenden Blechabschnitte an ihren Seitenrändern mit Wiederhaken versehen. So kann die Verbindung zwischen Trägerband und Intumeszenzstreifen weiter verbessert werden.

Gemäß einem Aspekt der Erfindung sind die gestanzten Blechabschnitte in Gruppen angeordnet. Die durch das Stanzen der Blechabschnitte entstandenen Öffnungen können mit den Schneidzonen überlappen. In Längsrichtung des Trägerbandes betrachtet, überlappen bevorzugt auch die Öffnungen einander. Außerdem kann es sich bei den Öffnungen um spitze Dreiecke handeln, welche bevorzugt so angeordnet sind, dass sie in Richtung der Schneidzonen weisen. Eine Brandschutzmanschette gemäß einem oder mehrerer der vorgenannten Aspekte ermöglicht einerseits eine verbesserte Verbindung zwischen Trägerband und Intumeszenzstreifen und verwirklicht andererseits - mit den gleichen Maßnahmen, d.h. Ausstanzen und Umbiegen der Blechabschnitte - eine gezielte Perforation in der Schneidzone. So kann das Trägerband in den Schneidzonen leichter durchtrennt werden.

Gemäß einer weiteren Ausführungsform sind Haltelaschen an den Rändern des Trägerbands vorgesehen. Diese Haltelaschen sind voneinander in Längsrichtung des Trägerbands beabstandet und derart gebogen, dass sie an den schmalen Seitenflächen des Intumeszenzstreifens anliegen. Wird ein Intumeszenzstreifen mit einem Wellenprofil verwendet, so liegen die Haltelaschen, gemäß einer weiteren Ausführungsform, bevorzugt an den Stirnseiten der Rippen dieses Wellenprofils an.

Bei der Herstellung einer Bandschutzmanschette wird der Intumeszenzstreifen bevorzugt auf das Trägerband aufgegossen. Dieses effektive Verfahren wird insbesondere bei Brandschutzmanschetten verwendet, deren Intumeszenzstreifen durchgängig ist. Bei Brandschutzmanschetten, die einen in Längsrichtung unterbrochenen und aus mehreren getrennten Blöcken bestehenden Intumeszenzstreifen aufweisen, werden das Trägerband und der Intumeszenzstreifen bevorzugt miteinander verpresst.

Weitere Merkmale und Vorteile der Erfindung ergeben sich aus der folgenden Beschreibung vorteilhafter Ausführungsbeispiele unter Bezugnahme auf die beigefügten Zeichnungen. Dabei zeigt:
- FIG. 1: eine Brandschutzmanschette in Draufsicht,
- FIG.2: eine schematische Perspektivansicht eines Intumeszenzstreifens für eine Brandschutzmanschette gemäß einem Ausführungsbeispiel,
- FIG. 3: diesen Intumeszenzstreifen in einer Schnittansicht,
- FIG. 4 und 5: jeweils eine Schnittansicht eines Intumeszenzstreifens für Brandschutzmanschetten gemäß weiteren Ausführungsbeispielen,
- FIG. 6 und 7: jeweils eine Brandschutzmanschette gemäß weiteren Ausführungsbeispielen,
- FIG. 8: ein Stanzbild eines Trägerbandes für eine Brandschutzmanschette gemäß einem Ausführungsbeispiel,
- FIG. 9: eine schematische Perspektivansicht dieses Trägerbandes in gebogenem Zustand,
- FIG. 10: eine Detailansicht eines mit Wiederhaken versehenen Blechabschnitts eines solchen Trägerbandes, gemäß einem Ausführungsbeispiel und
- FIG. 11: eine schematische Perspektivansicht einer Brandschutzmanschette gemäß einem weiteren Ausführungsbeispiel.

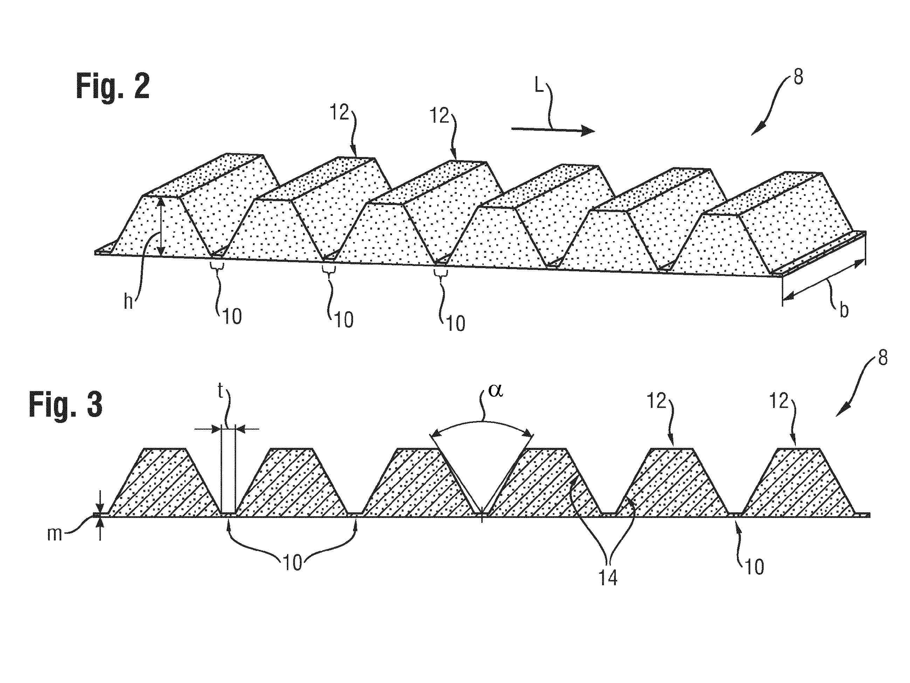

FIG. 2 zeigt eine schematische Perspektivansicht eines Intumeszenzstreifens 8 für eine Brandschutzmanschette 2 gemäß einem ersten Ausführungsbeispiel. Der Intumeszenzstreifen 8 weist Schneidbereiche 10 auf, die sich zwischen den in Längsrichtung L voneinander beabstandeten Blöcken 12 befinden. Die Dicke des Intumeszenzstreifens 8 ist in diesen Schneidbereichen 10 geringer als in den benachbarten Bereichen, die eine maximale Dicke h aufweisen. Bevorzugt beträgt die Dicke m des Intumeszenzstreifens 8 in den Schneidbereichen 10 maximal 5 mm. Die Breite t der Schneidbereiche 10 (vgl. auch FIG. 2) beträgt in Längsrichtung L zumindest 3 mm. Die Breite b des Intumeszenzstreifens 8 beträgt bevorzugt zwischen 20 und 100 mm, die maximale Höhe h der Blöcke 12 liegt bevorzugt zwischen 4 und 30 mm.

FIG. 3 zeigt den aus FIG. 2 bekannten Intumeszenzstreifen 8 in einem Schnitt. Die minimale durchgehende Banddicke m ist so ausgelegt, dass der Intumeszenzstreifen 8 gemeinsam mit einem Trägerband eine ausreichend stabile Einheit bildet, die beim Wickeln um einen Leitungsstrang nicht bricht. Gleichzeitig ist die Dicke m so dünn gewählt, dass der Intumeszenzstreifen 8 z.B. mit Hilfe einer Blechschere problemlos geschnitten werden kann. Um ein Schneidwerkzeug, z.B. die Blechschere, problemlos zwischen die Flanken 14 der Blöcke 12 einführen zu können und die Brandschutzmanschette in dem Schneidbereich 10 auf der gewünschten Länge abzulängen, ist die Neigung der Flanken 14 so gewählt, dass diese einen Öffnungswinkel α einschließen, der so gewählt ist, dass sich die Flanken nach dem Umwickeln eines Rohres gerade nicht berühren .

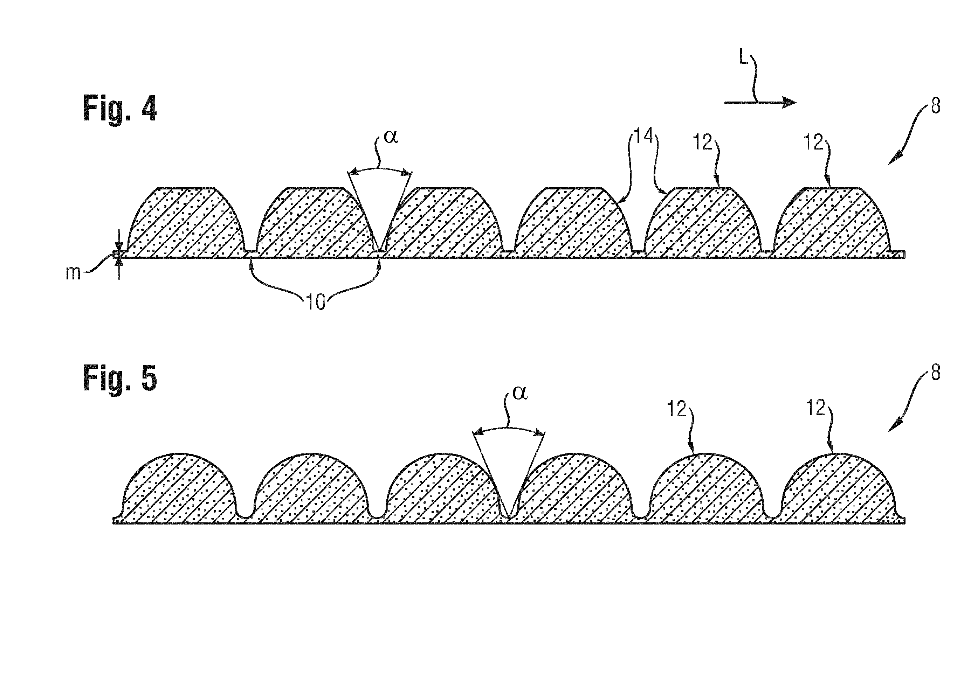

Der in den FIG. 2 und 3 gezeigte Intumeszenzstreifen 8 weist ein Rippenprofil auf. Die in den folgenden FIG. 4 und 5 im Querschnitt gezeigten Intumeszenzstreifen 8 sind mit einem Wellenprofil (FIG. 5) und einem gemischten Wellen-/Rippenprofil (FIG. 4) versehen. Wiederum sind die Flanken 14 der Blöcke 12 so ausgestaltet, dass diese zumindest einen Öffnungswinkel α einschließen, der ebenfalls so gewählt ist, dass sich die Flanken nach dem Umwickeln eines Rohres gerade nicht berühren. Für die maximale Dicke m des Intumeszenzstreifens 8 in den Schneidbereichen 10 gilt wiederum zumindest m ≤ 5 mm. Die Breite der Schneidebereiche 10 in Längsrichtung L beträgt zumindest 3 mm.

Die Herstellung der in den FIG. 2 bis 5 gezeigten Intumeszenzstreifen 8 erfolgt bevorzugt in einem Extrusionsprozess. Es kann endlos produziert werden, wobei noch im weichen Zustand des Intumeszenzstreifens 8 durch eine entsprechend geformte Walze die gewünschte Rippen- bzw. Wellenstruktur eingewalzt werden kann.

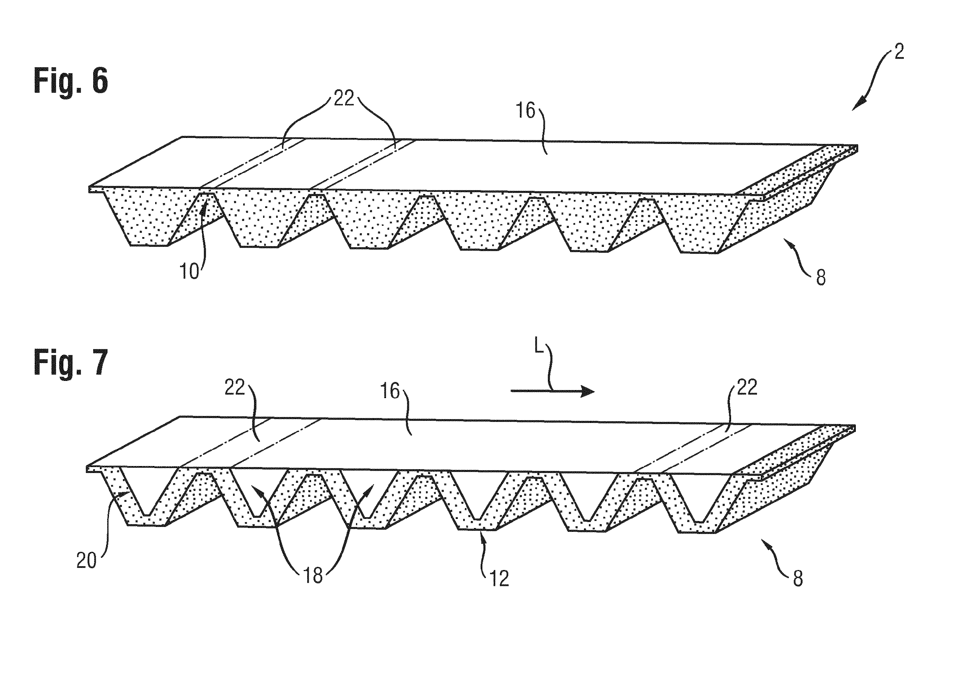

FIG. 6 zeigt eine Brandschutzmanschette 2 gemäß einem weiteren Ausführungsbeispiel. Der im unteren Bereich gezeigte Intumeszenzstreifen 8 ist mit seiner Rückseite auf ein Trägerband 16 aus Blech aufgebracht. Bevorzugt wird die Brandschutzmanschette 2 hergestellt, indem der Intumeszenzstreifen 8 direkt auf das Trägerband 16 aufextrudiert und anschließend entsprechend strukturiert wird. Um die Verbindung zwischen dem Trägerband 16 und dem Intumeszenzstreifen 8 zu verbessern, kann das Trägerband 16, wie in FIG. 7 dargestellt, mit in Längsrichtung L voneinander beabstandeten abgebogenen Haltelaschen 18 versehen sein. Bei dem gezeigten Ausführungsbeispiel befinden sich die Haltelaschen 18 des Trägerbandes 16 an den Stirnseiten 20 der Blöcke 12 des Intumeszenzstreifens 8.

Das Trägerband 16 weist Schneidezonen 22 auf, die mit den Schneidbereichen 10 des Intumeszenzstreifens 8 überlappen. Bevorzugt sind die Schneidezonen 22 und die Schneidbereiche 10 deckungsgleich. Die Schneidezonen 22 können bevorzugt so ausgelegt sein, dass ein Durchtrennen der Brandschutzmanschette 2 in den Schneidezonen 22 bzw. den Schneidbereichen 10 erleichtert ist. Beispielsweise kann das Trägerband 16 in den Schneidezonen 22 eine geringere Dicke aufweisen oder z.B. durch Ausstanzen perforiert sein.

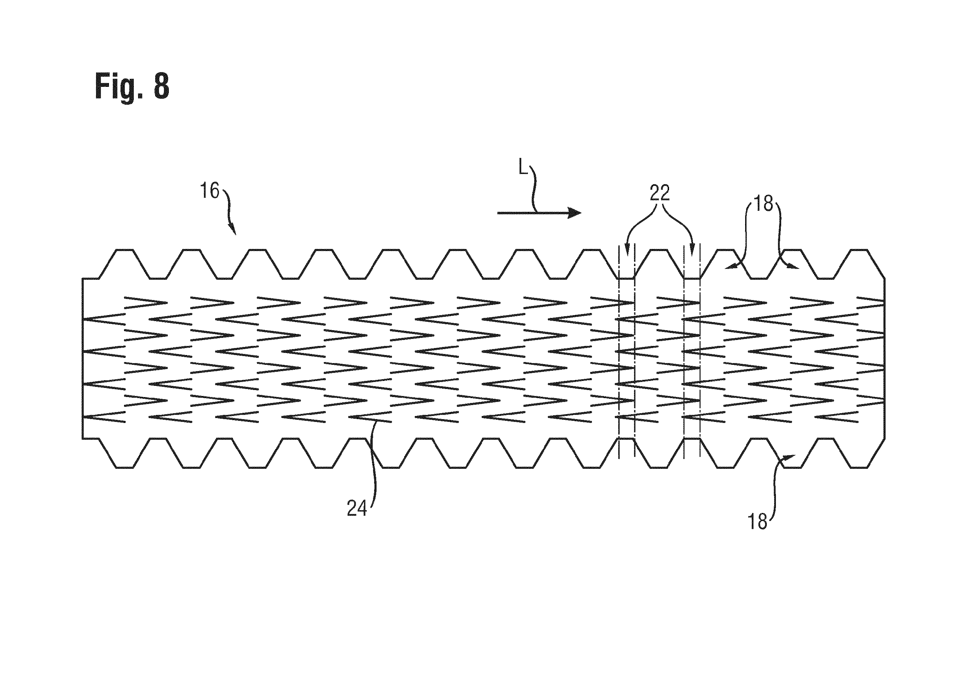

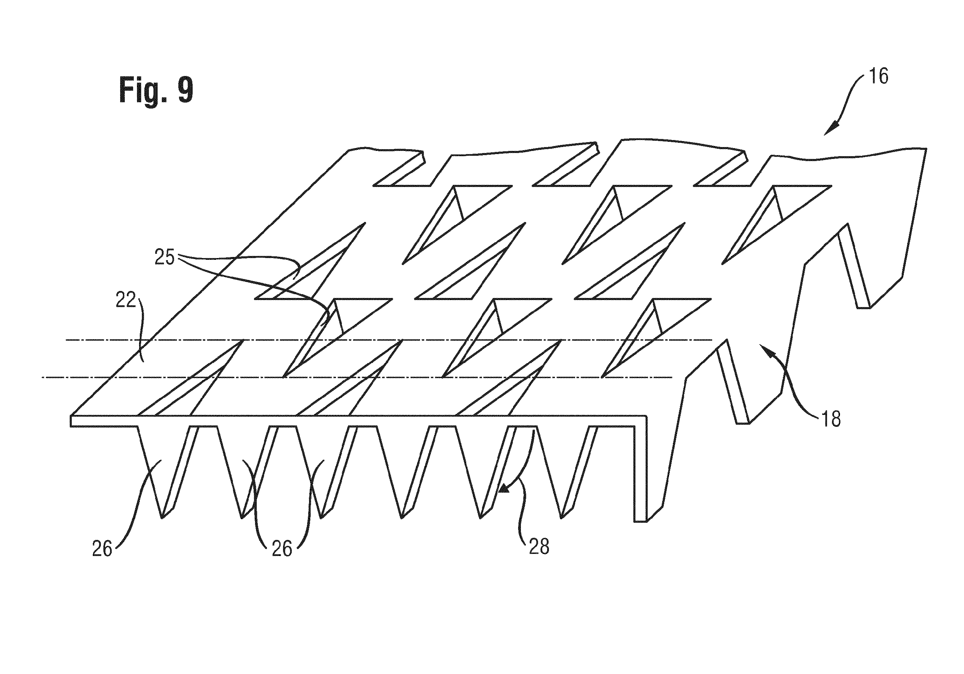

FIG. 8 zeigt das Stanzbild eines Trägerbandes 16, welches eine Vielzahl von Standzöffnungen 24 aufweist, die die Form eines spitzen Dreiecks haben. Durch Ausbiegen der ausgestanzten Bereiche des Trägerbandes 16 entstehen Haken 26. Im Trägerband 16 bleiben entsprechende Öffnungen 25 zurück, die ebenfalls die Form eines spitzen Dreiecks haben (vgl. auch FIG. 9). Diese Öffnungen 25 überlappen mit den Schneidezonen 22 des Trägerbandes 16, wodurch dieses in den Schneidezonen 22 gezielt geschwächt und somit besser schneidbar wird. Vorteilhaft ist es, dass die durch das Ausstanzen entstehenden Öffnungen 25, die die Form spitzwinkliger Dreiecke haben, jeweils in Richtung der Schneidzonen 22 orientiert sind. Auf diese Weise kann eine gezielte Perforation des Trägerbandes 16 im Bereich der Schneidezonen 22 erreicht werden. Außerdem ist es vorteilhaft, wenn sich die Öffnungen 25, betrachtet in Längsrichtung L, überlappen. An den Seitenkanten des Trägerbandes 16 befinden sich die Haltelaschen 18, welche ebenso wie die Haken 26 in einem folgenden Arbeitsschritt umgebogen werden.

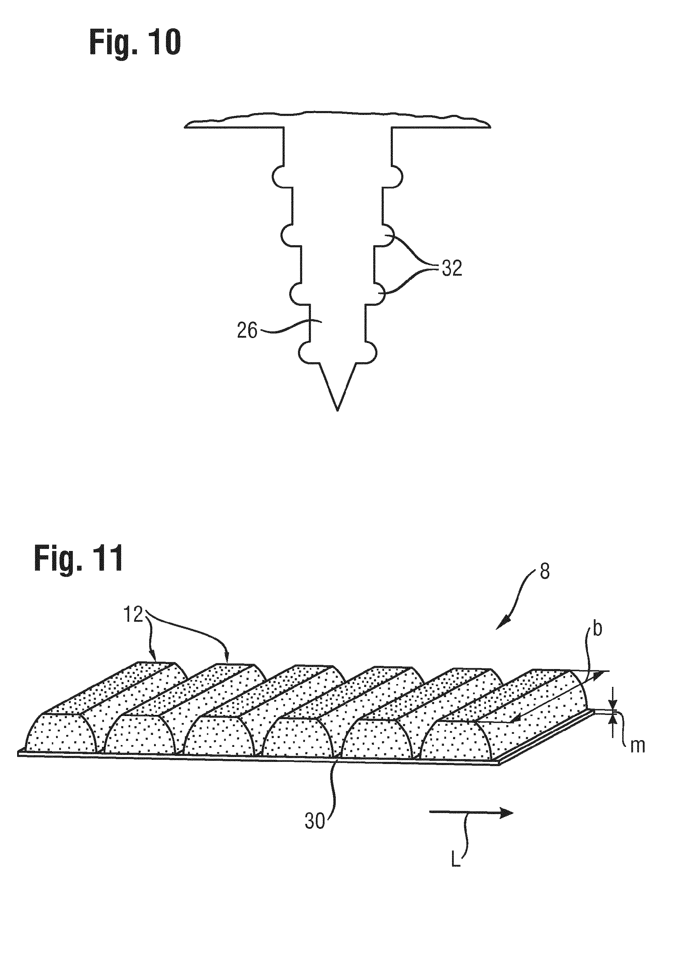

Das Ergebnis dieses Arbeitsschrittes zeigt FIG. 9 in vereinfachter perspektivischer Ansicht. Die Haken 26 und die Seitenlaschen 18 ragen nach unten aus der Ebene des Trägerbandes 16 heraus. Der Biegevorgang ist durch entsprechende Pfeile, welche eine Biegerichtung 28 illustrieren, dargestellt. Das Trägerband 16 ist in der Schneidezone 22 in Folge des Ausstanzens und durch die entstandenen Öffnungen 25 geschwächt und somit leichter zu schneiden. Zur Verbindung des Intumeszenzstreifens 8 mit dem Trägerband 16 kann der Intumeszenzstreifen 8 auf das Trägerband 16 aufextrudiert werden. Eine bevorzugte Alternative besteht jedoch darin, dass zunächst ein trapezförmiger Streifen aus Intumeszenzmaterial extrudiert und anschließend auf einen Intumeszenzträger aufgeklebt wird. FIG. 11 zeigt beispielhaft eine solche Struktur in perspektivischer Ansicht. Die trapezförmigen Blöcke 12 können in einem endlosen Extrusionsverfahren hergestellt und auf die entsprechende Länge (welche der Breite b des Intumeszenzstreifens 8 entspricht) abgelängt werden. Anschließend können die einzelnen Blöcke 12 auf einen Intumeszenzträger 30, bei welchem es sich z.B. ebenfalls um Intumeszenzmaterial, aber auch um ein Gewebeband handeln kann, aufgeklebt. Der so hergestellte Intumeszenzstreifen 8 wird bevorzugt mit einem Trägerband 16, wie es beispielhaft FIG. 9 zeigt, verpresst. Die an dem Trägerband 16 vorhandenen Haken 26 können, wie FIG. 10 zeigt, mit Widerhaken 32 versehen sein. Diese verstärken die Verbindung zwischen dem Trägerband 16 und dem Intumeszenzstreifen 8.

Gemäß einem weiteren Ausführungsbeispiel können die Blöcke 12, abweichend von dem im Zusammenhang mit FIG. 11 beschriebenen Verfahren, direkt auf ein Trägerband 16 aufextrudiert oder aufgepresst werden.

Wird der Intumeszenzstreifen 8, wie ihn FIG. 11 zeigt, aus einzelnen in Längsrichtung L separaten Blöcken 12 hergestellt, so ist die minimale Dicke m des Intumeszenzstreifens 8 in den Schneidbereichen 10 (vgl. z.B. FIG. 3) lediglich durch die Dicke des Intumeszenzträgers 30 bestimmt. Werden die Blöcke 12 direkt auf das Trägerband 16 aufextrudiert oder aufgepresst, so ist die minimale Dicke m des Intumeszenzstreifens gleich Null (m = 0). In dem Schneidbereich 10 ist lediglich das Trägerband 16 vorhanden. So kann die Brandschutzmanschette 2 besonders einfache entlang der Schneidezonen 22 getrennt werden.

Der Intumeszenzstreifen 8 kann bevorzugt aus einem Gießharz hergestellt werden. Dieses kann in eine negative Form gegossen oder gespritzt werden. Das Trägerband 16 kann in das noch weiche Gießharz eingelegt werden, der in der Gießharzform entstehende Intumeszenzstreifen 8 und das Trägerband verbinden sich während des Aushärtevorgangs. Nach dem Aushärten ist die Brandschutzmanschette 2 einsatzbereit und kann entsprechend der benötigten Größe abgelängt werden.

## Patentansprüche

1. Brandschutzmanschette (2) mit einem aus Blech bestehenden Trägerband (16) und einem Intumeszenzstreifen (8), der entlang des Trägerbandes (16) verläuft und mit diesem verbunden ist, wobei das Trägerband (16) mit mehreren vordefinierten in einer Längsrichtung (L) voneinander beabstandeten und quer zu der Längsrichtung (L) verlaufenden Schneidezonen (22) versehen ist und der Intumeszenzstreifen (8) mehrere in gleicher Weise orientierte Schneidbereiche (10) aufweist, in denen eine Dicke des Intumeszenzstreifens (8) gegenüber in Längsrichtung (L) benachbarten Bereichen verringert ist, wobei die Schneidbereiche (10) mit den Schneidezonen (22) zusammenfallen.

2. Brandschutzmanschette (2) nach Anspruch 1, bei der der Intumeszenzstreifen (8), in Längsrichtung (L) des Trägerbandes (16) betrachtet, ein Rippen- oder Wellenprofil aufweist.

3. Brandschutzmanschette (2) nach einem der vorhergehenden Ansprüche, bei der die Dicke (m) des Intumeszenzstreifens (8) in den Schneidbereichen (10) maximal 5 mm beträgt.

4. Brandschutzmanschette (2) nach einem der vorhergehenden Ansprüche, bei der die Breite des Schneidbereichs (10) mindestens 3 mm beträgt.

5. Brandschutzmanschette (2) nach einem der vorhergehenden Ansprüche, bei der der Intumeszenzstreifen (8), in der Längsrichtung (L) des Trägerbandes (16) betrachtet, aus mehreren getrennten Blöcken (12) besteht, zwischen denen jeweils ein Zwischenraum besteht, der den Schneidbereich (10) bildet.

6. Brandschutzmanschette (2) nach einem der vorhergehenden Ansprüche, bei der das Trägerband (16) mit mehreren Haken (26) versehen ist, die durch gestanzte und abgebogene Blechabschnitte des Trägerbandes (16) gebildet sind.

7. Brandschutzmanschette (2) nach Anspruch 6, bei der die gestanzten Blechabschnitte in Gruppen angeordnet sind, und durch das Stanzen der Blechabschnitte entstandene Öffnungen (25) mit den Schneidezonen (22) überlappen.

8. Brandschutzmanschette (2) nach Anspruch 7, bei der, in Längsrichtung (L) des Trägerbandes (16) betrachtet, die Öffnungen (25) einander überlappen.

9. Brandschutzmanschette (2) nach Anspruch 7 oder 8, bei der die Öffnungen (25) die Form eines spitzen Dreiecks haben.

10. Brandschutzmanschette (2) nach einem der Ansprüche 6 bis 9, bei der die Blechabschnitte an ihren Seitenrändern Widerhaken (32) aufweisen.

11. Brandschutzmanschette (2) nach einem der vorhergehenden Ansprüche, bei der Haltelaschen (18) an den Rändern des Trägerbandes (16) vorgesehen sind, die voneinander in Längsrichtung (L) des Trägerbandes (16) beabstandet und derart abgebogen sind, so dass sie an den schmalen Seitenflächen des Intumeszenzstreifens (8) anliegen.

12. Brandschutzmanschette (2) nach einem der vorhergehenden Ansprüche, bei der der Intumeszenzstreifen (8) auf das Trägerband (16) aufgegossen ist.

13. Brandschutzmanschette (2) nach einem der Ansprüche 1 bis 11, bei der das Trägerband (16) und der Intumeszenzstreifen (8) verpresst sind.
